# EUROPEAN PATENT SPECIFICATION

(11) **EP 0 239 278 B1**
(45) Date of publication and mention of the grant of the patent: **02.06.1993**
(21) Application number: 87301994.7
(22) Date of filing: 09.03.1987
(51) Int. Cl.: H02J 3/18

(54) **Capacitor apparatus for reactive power compensation**
Kondensatorgerät zur Blindleistungkompensation
Appareil capacitif pour la compensation de puissance réactive

(30) Priority: 26.03.1986 JP 65920/86
(43) Date of publication of application: 30.09.1987
(73) Proprietor: KABUSHIKI KAISHA TOSHIBA, Kawasaki-shi, Kanagawa-ken 210 (JP)
(72) Inventor: Nishikawa, Tadashi c/o Patent Division, Minato-ku Tokyo (JP)
(74) Representative: Kirk, Geoffrey Thomas

(56) References cited:
- US-A- 3 391 329
- US-A- 4 204 150
- US-A- 4 359 678
- US-A- 4 365 190
- A.S.E.A. JOURNAL vol. 54, no. 506, 1981, VÄSTERÿS SE page 121 - 127; H. FRANK et al.: "Thyristor-controlled shunt compensation in power networks"

## Description

This invention relates to apparatus employing capacitors for reactive power compensation in an AC power supply network.

It is well known that the reactive power caused by a reactive load connected to an AC power supply network can be compensated with capacitors. When the load is changing, however, the reactive power is also changing and, hence, the capacitive compensation also has to be changed. If an attempt is made to change the capacitive compensation too quickly with respect to a change in the load, various problems can occur.

It is known from US-A-4359678 for a power regulator to control the number of power factor correction capacitors or reactors connected to an electrical power network. A multiplier circuit measures the reactive power by comparing two signals which vary in phase angle and amplitude to indicate the amount of reactive power. The output from the multiplier circuit is compared to reference limits and, if either limit is exceeded, one correction capacitor is connected or disconnected to the circuit to at least partly compensate the reactive power.

This arrangement can operate slowly when several capacitors are required to compensate the reactive power.

It is an object of the present invention to provide reactive power compensation apparatus which overcomes these problems.

According to the present invention, reactive power compensation apparatus for an AC power supply network supplying a variable reactive load comprises a compensation circuit connected in parallel with the load and having a plurality of parallel capacitor banks; means for detecting the combined reactive power in the load and the compensation circuit; and switching means for switching capacitor banks into and out of parallel relation with the load so that the required number of banks are in parallel with the load to at least partly compensate for the reactive power; characterised in the provision of means responsive to the combined reactive power which determine the number of capacitor banks which are required in parallel with the load and produces a signal representative of said number; an add/subtract circuit to which said signal is applied and which produces an output representing the difference between the number of capacitor banks represented by the signal and the number of capacitor banks already connected in parallel with the load; said output being supplied to the switching means to switch the appropriate number of capacitor banks, said output being held by latching means for a predetermined time interval.

The switching means conveniently includes in each capacitor bank a pair of thyristors connected in parallel opposed relation in series with a capacitor.

In order that the invention may be more readily understood, it will now be described, by way of example only, with reference to the accompanying drawings, in which:-
Figure 1 is a diagram of a three-phase electric power supply network with a load and a plurality of delta-connected reactive power compensators;
Figure 2 is a block diagram of a reactive power compensator of an embodiment of this invention in one of the three phases of the power supply network shown in Figure 1;
Figure 3 is a graph showing the relationship between the input and the output of the reactive power detecting transducer shown in Figure 2;
Figures 4a to 4d are graphs showing the relationships between the inputs and the outputs of the first and n-th positive level detecting circuits, and the first and n-th negative level detecting circuits shown in Figure 2, respectively;
Figure 5 is a graph showing the number of level detecting circuits shown in Figure 2 which output 1 or -1 in accordance with the output of the reactive power detecting transducer;
Figure 6a is a graph showing a slowly changing reactive power of the load and corresponding reactive power compensated with a compensator shown in Figure 2;
Figure 6b is a graph showing the number of switched-on capacitor banks corresponding to Figure 6a; and
Figures 7a and 7b are graphs of compensated reactive powers obtained, respectively, with a compensator of this invention and with a compensator not having a latching circuit.

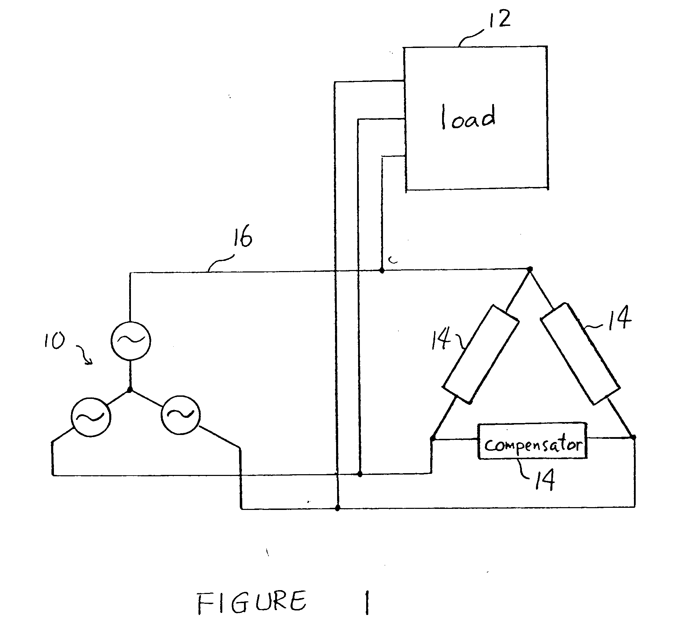

Referring to Figure 1, a three-phase electric power supply network comprises a star-connected power source 10, a variable reactive load 12 and delta-connected reactive power compensators 14. Numeral 16 denotes a power feeder. Alternatively, the power source may be connected in "delta", and the compensators may be connected in "star" as a variant to the embodiment shown in Figure 1.

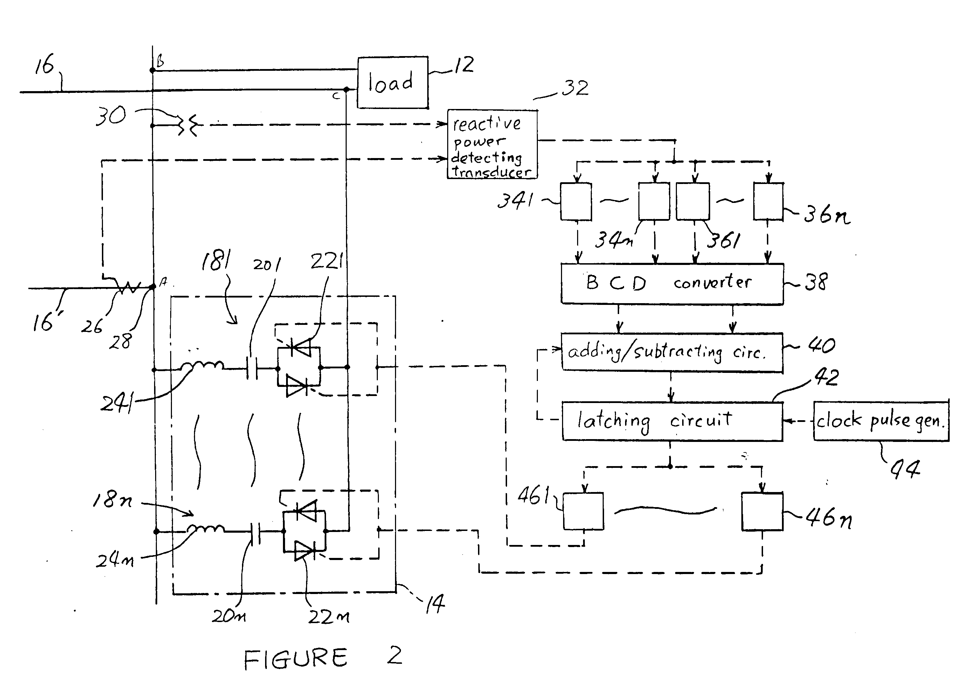

A detailed structure of a compensator with its controller for a single phase power supply is shown in Figure 2. In this figure, solid lines denote large current power cables, while dashed lines denote signal cables. The compensator 14 comprises a plurality of capacitor banks 181 - 18n connected in parallel. Each bank has a capacitor 201 - 20n, a pair of parallel-opposed thyristors 221 - 22n and a reactor 241 - 24n connected in series. The reactors 241 - 24n are provided in order to eliminate the risk of resonance at the harmonics present in the power supply network.

A current transformer 26 is arranged on a feeder 16 upstream of the junction 28 of the compensator 14 and the load 12, so that the current to both the load 12 and the compensator 14 can be detected. A potential transformer 30 for voltage detection is arranged in parallel to the load 12. A reactive power detecting transducer 32 is connected to the current transducer 26 and the potential transformer 30, so that the reactive power in the load 12 and the compensator 14 can be detected.

The output of the transducer 32 is supplied to a plurality of positive level detecting circuits 341 - 34n and the same number of negative level detecting circuits 361 - 36n.

The outputs of all the level detecting circuits are fed to a BCD (binary-coded decimal) converter 38.

The output of the converter 38 is fed to an adding/subtrating circuit 40, the output of which is fed to a latching circuit 42 which latches its input signal for a period predetermined by a clock pulse generator 44.

The output of the latching circuit 42 is fed back to the adding/subtracting circuit 40, and is also fed to gate controlling units 461 - 46n each of which switches on and off a corresponding pair of the thyristors 221 - 22n.

Referring to Figure 3, the reactive power detecting transducer 32 has linear characteristics, and a lagging-phase reactive power gives a positive output, while a leading-phase reactive power gives a negative output.

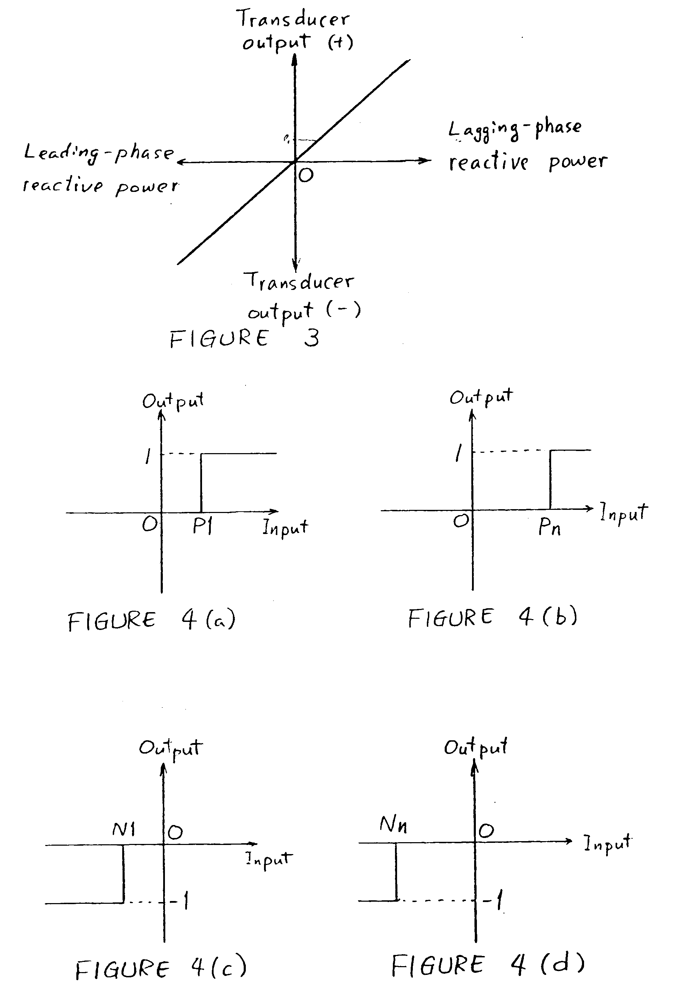

Referring to Figure 4a, the output of the first positive level detecting circuit 341 becomes 1 only wheh its input is larger than a positive value P1, corresponding to a lagging-phase reactive power requiring one additional capacitor bank for compensation.

Likewise, referring to Figure 4b, the output of the n-th positive level detecting circuit 34n becomes 1 only when its input is larger than a positive value Pn, corresponding to a reactive power requiring n additional capacitor banks for compensation. The other positive level detecting circuits 342, 343, etc. have similar characteristics, except for the input values for the stepwise change.

Likewise, referring to Figure 4c, the output of the first negative level detecting circuit 361 becomes -1 only when its input is smaller than a negative value N1 corresponding to reactive power of one excessive capacitor bank.

Referring to Figure 4d, the output of the n-th negative level detecting circuit 36n becomes -1 only when its input is smaller than a negative value Nn, corresponding to reactive power of n excessive capacitor banks. The other negative level detecting circuits 362, 363, etc. have similar characteristics, except for the input value for the stepwise change.

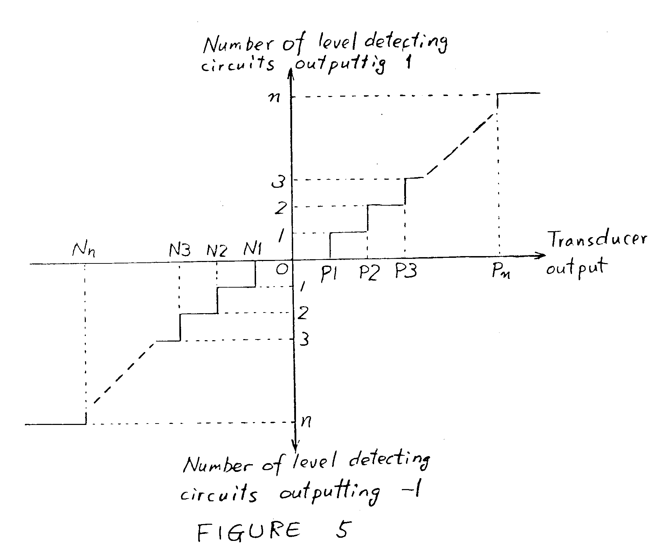

As the output of the transducer 32 is fed to all the level detecting circuits 341 - 34n and 361 - 36n, the number of positive level detecting circuits 341 - 34n outputting 1 and the number of negative level detecting circuits 361 - 36n outputting -1 changes corresponding to the detected reactive power, as shown in Figure 5.

Reactive power is detected by the detecting transducer 32, and its output is represented as the number of the level detecting circuits 341 - 34n or 361 - 36n which output 1 or -1. The number corresponds to the required number of capacitor banks to be added or to be removed. The outputs of the level detecting circuits 341 - 34n and 361 - 36n are translated in the BCD converter 38 into a control signal which identifies a pertinent number of capacitor banks to be switched on or off. The output of the converter 38 is fed to the adding/subtracting circuit 40, where the output of the converter 38 is added to or subtracted from the latched value in the latching circuit 42 in accordance with the sign of the output of the converter 38,

The latching circuit 42 latches the result calculated by the adding/subtracting circuit 40 for a time period predetermined by the clock pulse generator 44.

The output of the latching circuit 42 is fed to the gate control units 461 - 46n. Each of these units controls a corresponding one of the pairs of thyristors 221 - 22n, and only the required number of capacitor banks are switched on.

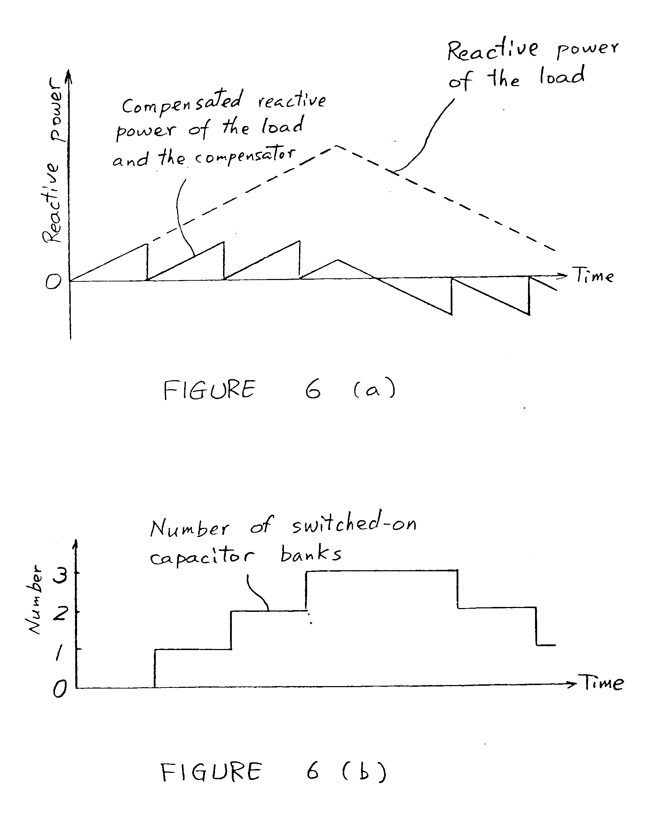

Referring to Figures 6a and 6b, when the reactive power of the load 12 increases from zero to a positive value and then decreases very slowly, as shown by the dotted line in Figure 6a, the required number of capacitor banks are switched on and off at appropriate times, as shown in Figure 6b, and the combined compensated reactive power of the load 12 and the compensator 14 is held within a narrow band corresponding to a single deficient or excess capacitor bank, as shown by the solid line in Figure 6a.

Since the detected reactive power used for the control is based on the current both in the load 12 and the compensator 14, the residual deflection of the reactive power is mitigated, compared with the open loop control system.

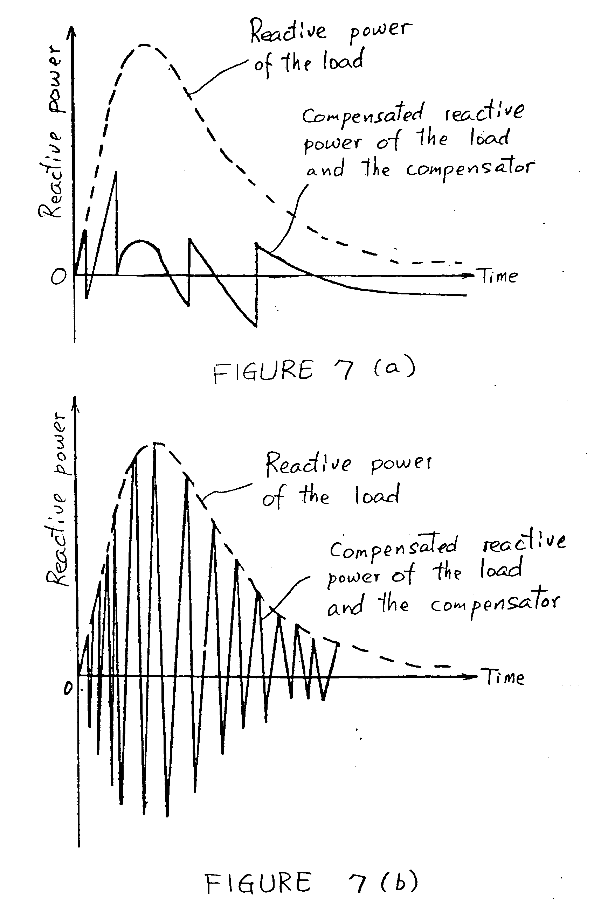

Referring to Figure 7a, when the reactive power of the load 12 changes rapidly, as shown by the dashed line, the compensated reactive power fluctuates more than that in the slowly changing case, as shown by the solid line, because the switching time for capacitor banks 181 - 18n is limited to the latching period stipulated by the clock pulse generator 44. However, no hunting takes place because of the limitation of the switching time.

Figure 7b shows a compensated reactive power in response to the same reactive power change of the load 12, as in the case of Figure 7a. The compensated reactive power, shown by the solid line in Figure 7b, is obtained by using a compensator which is the same as the above-mentioned embodiment, except that the latching circuit 42 and the clock pulse generator 44 are omitted. In this case the compensated reactive power oscillates, causing "hunting", with a characteristic frequency determined by the power supply system and the control system.

## Claims

1. Reactive power compensation apparatus for an AC power supply network (10) supplying a variable reactive load (12) comprising a compensation circuit (14) connected in parallel with the load (12) and having a plurality of parallel capacitor banks (181-18n); means (32) for detecting the combined reactive power in the load and the compensation circuit; and switching means (22, 46) for switching capacitor banks into and out of parallel relation with the load so that the required number of banks are in parallel with the load to at least partly compensate for the reactive power; characterised in the provision of means (34, 36, 38) responsive to the combined reactive power which determine the number of capacitor banks which are required in parallel with the load and produces a signal representative of said number; an add/subtract circuit (40) to which said signal is applied and which produces an output representing the difference between the number of capacitor banks represented by the signal and the number of capacitor banks already connected in parallel with the load; said output being supplied to the switching means to switch the appropriate number of capacitor banks, said output being held by latching means (42, 44) for a predetermined time interval.

2. Reactive power compensation apparatus as claimed in claim 1, characterised in that said switching means includes in each capacitor switching bank a pair of thyristors (22) connected in parallel opposed relation in series with the capacitor.

## Patentansprüche

1. Reaktive Leistungskompensationsvorrichtung für ein Wechselstrom-Netzgerät (10), das eine variable reaktive Last (12) speist, mit einer Kompensationsschaltung (14), die parallel zu der Last (12) liegt und eine Anzahl von parallelen Kondensatorpaketen (181-18n) aufweist; mit Mitteln (32) zum Erkennen der kombinierten reaktiven Leistung in der Last und der Kompensationsschaltung; und mit Schaltmitteln (22, 46) zum Schalten der Kondensatorpakete in und aus der parallelen Lage zur Last, so daß die benötigte Anzahl von Paketen parallel zu der Last liegt, um zumindest teilweise die reaktive Leistung zu kompensieren; **dadurch gekennzeichnet**, daß Mittel (34, 36, 38) vorgesehen sind, die auf die kombinierte reaktive Leistung ansprechen, welche die Anzahl der Kondensatorpakete bestimmt, die parallel zu der Last liegen sollen, und die ein Signal entsprechend dieser Anzahl erzeugen; und durch eine Additions/Substraktionsschaltung (40), an die das Signal gelegt wird und das eine Ausgabe liefert, die die Differenz zwischen der Anzahl der Kondensatorpakete darstellt, die von dem Signal angegeben werden, und der Anzahl von Kondensatorpaketen, die bereits parallel zu der Last liegen; und daß die Ausgabe an das Schaltmittel gelegt wird, um die richtige Anzahl von Kondensatorpaketen anzuschalten, wobei die Ausgabe eine vorgegebene Zeitspanne in einem Pufferspeicher (42, 44) gehalten wird.

2. Reaktive Leistungskompensationsvorrichtung nach Anspruch 1, **dadurch gekennzeichnet**, daß das Schaltmittel in jedem Kondensatorschaltblock ein Paar Thyristoren (22) umfaßt, die antiparallel in Reihe mit dem Kondensator liegen.

## Revendications

1. Appareil pour la compensation de puissance réactive pour un réseau d'alimentation en courant alternatif (10) alimentant une charge réactive variable (12) comprenant un circuit de compensation (14) connecté en parallèle avec la charge (12) et ayant une pluralité de blocs à condensateur parallèles (181 - 18n); un moyen (32) pour détecter la puissance réactive combinée dans la charge et le circuit de compensation; et un moyen de commutation (22, 46) pour connecter et déconnecter les blocs à condensateur en parallèle à la charge, de sorte que les blocs en nombre requis sont en parallèle à la charge pour compenser, au moins partiellement, la puissance réactive; caractérisé en ce que des moyens (34, 36, 38) sensibles à la puissance réactive combinée sont prévus pour déterminer le nombre de blocs à condensateur nécessaires en parallèle avec la charge et produire un signal représentatif dudit nombre; un circuit additionneur-soustracteur (40) auquel ledit signal est appliqué et qui produit une sortie représentant la différence entre le nombre de blocs à condensateur représenté par le signal et le nombre de blocs à condensateur déjà connectés en parallèle avec la charge; ladite sortie étant fournie au moyen de commutation pour commuter le nombre approprié de blocs à condensateur, ladite sortie étant maintenue par un moyen de maintien (42, 44) pendant un intervalle de temps prédéterminé.

2. Appareil de compensation de puissance réactive selon la revendication 1, caractérisé en ce que ledit moyen de commutation comprend dans chaque bloc de commutation à condensateur, une paire de thyristors (22) connectés tête-bêche, en série avec le condensateur.
